# EUROPÄISCHE PATENTSCHRIFT

(11) **EP 3 446 797 B1**
(45) Veröffentlichungstag und Bekanntmachung des Hinweises auf die Patenterteilung: **05.10.2022**
(21) Anmeldenummer: 18188899.1
(22) Anmeldetag: 14.08.2018
(51) Int. Cl.: B08B 1/00, B08B 3/02, B65G 33/00, B65G 45/00, E21B 12/06

(54) **REINIGUNGSVORRICHTUNG UND VERFAHREN ZUR REINIGUNG EINER FÖRDERSCHNECKE**
CLEANING DEVICE AND METHOD FOR CLEANING AN AUGER
DISPOSITIF DE NETTOYAGE ET PROCÉDÉ DE NETTOYAGE D'UN VIS SANS FIN

(30) Priorität: 24.08.2017 DE 102017119377
(43) Veröffentlichungstag der Anmeldung: 27.02.2019
(73) Patentinhaber: Karl Schnell GmbH & Co. KG, 73650 Winterbach (DE)
(72) Erfinder: JÖCHNER, Eugen, 97993 Creglingen (DE)
(74) Vertreter: Kohler Schmid Möbus Patentanwälte

(56) Entgegenhaltungen:
- EP-A1- 0 744 525
- EP-A1- 1 367 215
- FR-A1- 2 520 334
- GB-A- 2 365 467
- US-A1- 2017 173 645

## Beschreibung

Die vorliegende Erfindung betrifft eine Reinigungsvorrichtung zur Reinigung einer Förderschnecke eines Schneckenförderers und einen Schneckenförderer mit einer solchen Reinigungsvorrichtung. Die Erfindung betrifft auch ein Verfahren zum Reinigen einer Förderschnecke eines Schneckenförderers.

Die Reinigung einer Förderschnecke, die in einem Schneckentrog eines Schneckenförderers gelagert ist, kann manuell beispielsweise mittels eines Hochdruckreinigers erfolgen. Zu diesem Zweck wird typischerweise ein Podest für den Bediener des Hochdruckreinigers benötigt. Zur Reinigung der Förderschnecke und/oder des Schneckentrogs können auch automatisierte Reinigungsvorrichtungen verwendet werden, bei denen die Drehbewegung der Förderschnecke ausgenutzt wird, um die Reinigungsvorrichtung in axialer Richtung entlang der Förderschnecke zu verschieben.

Die DE 119 247 C beschreibt eine Vorrichtung zum Reinigen von Transportschneckentrögen, die ein an einer Führungsschiene verschiebbar aufgehängtes Gestell aufweist, welches in gelenkiger Verbindung mit einer sich gegen die Wandungen des Troges anlegenden Bürste steht und, sich mit Armen gegen die Schneckengänge anlegend, bei der Drehung der Schnecke fortgeschoben wird. Das Gestell wird von auf der Führungsschiene laufenden Rollen getragen.

Die DE 42 38 730 C2 beschreibt eine Einrichtung zur Reinigung von Schneckengängen, wobei die Schnecke in einem geschlossenen Gehäuse untergebracht ist. Die Reinigungseinrichtung weist Reinigungselemente für beide Seiten der Schneckenflügel in Form von Schabern auf und ist sowohl auf der Schneckenwelle als auch an der Innenwand des Gehäuses geführt.

Die DE 91 15 174 U1 beschreibt eine Einrichtung zum Reinigen von Schneckenförderern, bei der oberhalb der Schneckenachse jeder Förderschnecke mindestens ein durch die Gangsteigung in axialer Richtung der Förderschnecke bewegbares Reinigungselement angeordnet ist, das zwischen zwei Gänge der Förderschnecke eingreift.

Die US 2017/0173645 A1 beschreibt eine weitere Reinigungsvorrichtung zur Reinigung einer Förderschnecke eines Schneckenförderers.

### Aufgabe der Erfindung

Es ist die Aufgabe der vorliegenden Erfindung, eine Reinigungsvorrichtung für eine Förderschnecke bereitzustellen, die einfach handhabbar ist und die eine gute Reinigungswirkung erzielt.

### Gegenstand der Erfindung

Diese Aufgabe wird gelöst durch eine Reinigungsvorrichtung zur Reinigung einer Förderschnecke eines Schneckenförderers, umfassend: einen schlittenförmigen Grundkörper zur Auflage auf mindestens zwei Schneckengängen der Förderschnecke, um den schlittenförmigen Grundkörper in axialer Richtung durch eine Drehbewegung der Förderschnecke zu verschieben, sowie eine an dem schlittenförmigen Grundkörper angebrachte Reinigungseinrichtung zur Reinigung der Förderschnecke.

Die erfindungsgemäße Reinigungsvorrichtung weist einen schlittenförmigen Grundkörper auf, der für die Reinigung der Förderschnecke sowie für die Reinigung des Schneckentroges auf mindestens zwei typischerweise in axialer Richtung benachbarte Schneckengänge einer Schneckenwendel der Förderschnecke aufgesetzt wird. Der schlittenförmige Grundkörper kann zu diesem Zweck an seiner Unterseite mindestens eine plane Auflagefläche aufweisen. Der schlittenförmige Grundkörper weist typischerweise eine geringe Bauhöhe auf und ist so flach, dass dieser auch in einem Schneckentrog verwendet werden kann, der ein geschlossenes Gehäuse bildet, d.h. in einem Schneckentrog, der an seiner Oberseite keinen abnehmbaren Deckel aufweist.

Bei dem schlittenförmigen Grundkörper handelt es sich um einen selbsttragenden, im Wesentlichen massiven Körper, der ein Gewicht in der Größenordnung von beispielsweise mehr als ca. 10 kg oder ca. 20 kg aufweisen kann. Das vergleichsweise großen Eigengewicht stabilisiert den schlittenförmigen Grundkörper bei der Verschiebung entlang der Förderschnecke, so dass es nicht erforderlich ist, den schlittenförmigen Grundkörper zusätzlich an der Welle der Förderschnecke oder an einer eigens zu diesem Zweck vorgesehenen Führungsschiene zu führen, wie dies bei den weiter oben beschriebenen Reinigungsvorrichtungen der Fall ist.

Mit Hilfe des schlittenförmigen Grundkörpers, der auf mindestens zwei Schneckengänge aufgelegt wird, ist für die Reinigungseinrichtung auch der Bereich zwischen den Schneckengängen unterhalb der Welle der Förderschnecke zugänglich. Somit kann mit Hilfe der Reinigungseinrichtung auch der Schneckentrog des Schneckenförderers gemeinsam mit der Förderschnecke gereinigt werden. Für die Reinigung der Förderschnecke über deren gesamte Länge wird der Grundkörper in der Art eines Schlittens in axialer Richtung entlang der Förderschnecke verschoben, indem die Förderschnecke mittels eines Antriebs um ihre Längsachse gedreht wird.

Bei einer Ausführungsform weist der schlittenförmige Grundkörper mindestens eine Anlagefläche zur Anlage an einer Seite eines Schneckengangs der Förderschnecke auf. Die Anlagefläche verstärkt die Kraftübertragung von der Förderschnecke auf den schlittenförmigen Grundkörper bei der Drehbewegung der Förderschnecke. Für den Fall, dass der schlittenförmige Grundkörper in beide Richtungen entlang der Förderschnecke bewegt werden soll - was einen Antrieb der Förderschnecke voraussetzt, dessen Drehrichtung umkehrbar ist - sind typischerweise mindestens zwei Anlageflächen an dem schlittenförmigen Grundkörper vorgesehen, die an gegenüberliegenden Seiten einer oder mehrerer Schneckengänge in Anlage gebracht werden.

Bei einer vorteilhaften Ausführungsform weist der schlittenförmige Grundkörper mindestens eine Einbuchtung auf, in die mindestens ein Schneckengang der Förderschnecke eingreift. Die Einbuchtung ist typischerweise an der Unterseite des Grundkörpers gebildet. Die Einbuchtung kann beispielsweise zwischen zwei planen Auflageflächen an der Unterseite des Grundkörpers gebildet sein, die zur Auflage auf zwei weiteren Schneckengängen dienen, die in axialer Richtung benachbart vor bzw. nach dem Schneckengang angeordnet sind, der in die Einbuchtung eingreift.

Bei einer Weiterbildung weist die Einbuchtung eine L-förmige Geometrie für den Eingriff eines L-förmigen Endes eines Schneckengangs auf. Bei einer vergleichsweise großen Länge des Schneckentroges ist es typischerweise erforderlich, eine oder mehrere Zwischenlagerungen vorzusehen, um die Förderschnecke im Schneckentrog abzustützen. Um im Bereich einer Zwischenlagerung die Reibung zwischen der Schneckenwendel und dem Schneckentrog zu minimieren, können die im Bereich der Zwischenlagerung angeordneten Schneckengänge ein L-förmiges Profil aufweisen, bei dem an dem radial außen liegenden Ende des Schneckengangs ein sich in axialer Richtung erstreckendes Flachmaterial angebracht ist, so dass sich ein im Längsschnitt L-förmiges Profil der im Bereich der Zwischenlagerung vorgesehenen Schneckengänge ergibt.

Bei einer weiteren Ausführungsform weist der schlittenförmige Grundkörper seitliche Führungsflächen zur Führung in einem Schneckentrog der Förderschnecke auf. Der schlittenförmige Grundkörper erstreckt sich typischerweise über die gesamte Breite des Schneckentroges, in dem die Förderschnecke gelagert ist. Für die seitliche Führung kann der schlittenförmige Grundkörper beispielsweise zwei plane seitliche Führungsflächen aufweisen, die sich im Wesentlichen in vertikaler Richtung erstrecken und zur seitlichen Führung des Grundkörpers an den Innenseiten des Schneckentroges in Anlage gebracht werden.

Bei einer weiteren Ausführungsform umfasst die Reinigungsvorrichtung einen Körper mit einer insbesondere magnetischen Codierung zur Bestimmung zumindest einer axialen Endlage des schlittenförmigen Grundkörpers in einem Schneckentrog des Schneckenförderers. In der Regel wird der schlittenförmige Grundkörper an einem ersten Ende des Schneckentrogs, d.h. in der Nähe einer ersten axialen Endlage, auf die Schneckengänge der Förderschecke aufgelegt und mit Hilfe des Antriebs der Förderschnecke in axialer Richtung zum anderen Ende des Schneckentrogs, d.h. in die zweite axiale Endlage, verschoben, um die Förderschnecke über ihre ganze Länge zu reinigen. Der Körper mit der Codierung kann an dem schlittenförmigen Grundkörper angebracht sein, um mit Hilfe von insbesondere berührungslosen Positionssensoren die momentane axiale Position des schlittenförmigen Grundkörpers in dem Schneckentrog zu bestimmen. Bei dem Körper mit der magnetischen Codierung kann es sich im einfachsten Fall um einen permanentmagnetischen Körper handeln, der von einem magnetischen Positionssensor detektiert werden kann.

Typischerweise ist ein Positionssensor an einem Ende des Schneckentrogs fest installiert, um mit Hilfe der Codierung das Erreichen der axialen Endlage durch den schlittenförmigen Grundkörper zu detektieren. Die Detektion der axialen Endlage(n) dient zur Begrenzung des Reinigungsweges des schlittenförmigen Grundkörpers in dem Schneckentrog. Bei dem berührungslosen Positionssensor kann es sich beispielsweise um einen magnetischen Positionssensor handeln. Auch ein optischer Positionssensor, der eine optische Codierung an dem Körper detektiert, ist möglich. Gegebenenfalls kann der Positionssensor an dem schlittenförmigen Grundkörper angebracht werden und ein Körper mit einer z.B. magnetischen Codierung kann an einem jeweiligen axialen Ende des Schneckentrogs angebracht sein. In diesem Fall ist allerdings typischerweise eine elektrische Kabelverbindung zu dem schlittenartigen Grundkörper erforderlich, die mit einem erheblichen Mehraufwand verbunden ist.

Bei einer weiteren Ausführungsform ist die Reinigungseinrichtung ausgebildet, ein Reinigungsmedium in mindestens einen Zwischenraum zwischen zwei benachbarte Schneckengänge einzubringen, auf denen der schlittenförmige Grundkörper aufliegt. Bei dem Reinigungsmedium handelt es sich typischerweise um ein Fluid, d.h. um eine Flüssigkeit oder um ein Gas. Bei dem Reinigungsmedium in Form einer Flüssigkeit kann es sich beispielsweise um eine Reinigungsflüssigkeit oder um eine Spülflüssigkeit handeln. Bei dem Reinigungsmedium in Form eines Gases kann es sich beispielsweise um Druckluft handeln. Die Verwendung eines Gases als Reinigungsmedium ist günstig, da dieses sich verflüchtigt und nicht wie bei einer Flüssigkeit entsorgt werden muss. Die Verwendung eines Reinigungsmediums in Form von Druckluft oder von anderen inerten Gasen ermöglicht es, Anhaftungen des zu fördernden Produkts von der Förderschnecke und/oder von dem Schneckentrog zu lösen und das abgelöste Produkt anschließend weiter zu verwenden. Durch die Einbringung des Reinigungsmediums nur in den Zwischenraum zwischen den Schneckengängen, an denen sich der schlittenförmige Grundkörper befindet, kann gegenüber der Reinigung mit einem Hochdruckreiniger die für die Reinigung benötigte Menge an Reinigungsmittel um typischerweise mindestens ca. 20 % reduziert werden.

Bei einer Weiterbildung dieser Ausführungsform weist die Reinigungseinrichtung zur Einbringung des Reinigungsmediums in den Zwischenraum mindestens eine insbesondere rotierende (Präzisions-)Reinigungsdüse auf. Mit Hilfe der Reinigungsdüse kann das Reinigungsmedium in den Zwischenraum eingesprüht werden. Durch die Verwendung einer rotierenden Reinigungsdüse kann das Reinigungsmedium homogen in dem Zwischenraum verteilt werden. Es kann aber alternativ auch eine starre Reinigungsdüse verwendet werden oder eine Kombination aus einer oder mehreren starren und einer oder mehreren rotierenden Reinigungsdüsen. Insbesondere kann eine rotierende Reinigungsdüse verwendet werden, die das Reinigungsmedium nicht nur in einer Ebene über einen Winkel von 360° verteilt, sondern z.B. durch die Verwendung von zwei Drehachsen im gesamten umgebenden dreidimensionalen Raum verteilt. Die Reinigungsdüse(n) sind typischerweise mit Hilfe von Distanzstück(en) von dem schlittenförmigen Grundkörper beabstandet und ragen in den Zwischenraum zwischen den Schneckengängen hinein. Die Reinigungsdüse(n) kann/können insbesondere ausgebildet sein, sowohl ein Reinigungsmedium in Form einer Flüssigkeit als auch ein Reinigungsmedium in Form eines Gases in den Zwischenraum einzusprühen.

Bei einer vorteilhaften Weiterbildung dieser Ausführungsform weist die Reinigungseinrichtung mindestens zwei Reinigungsdüsen auf, die zur Zuführung des Reinigungsmediums auf unterschiedliche Seiten der Schneckenwelle in unterschiedlichen Abständen von dem schlittenförmigen Grundkörper angeordnet sind. Durch die Verwendung von mindestens zwei rotierenden Reinigungsdüsen, die zueinander versetzt angeordnet sind, kann eine Reinigung ohne einen "Schatten" erfolgen, so dass der Bereich, der bei der Verwendung einer Reinigungsdüse durch die Schneckenwelle verdeckt werden würde, eliminiert werden kann. Die zwei oder mehr Reinigungsdüsen können auch in axialer Richtung zueinander versetzt sein. In diesem Fall können zwei oder mehr Reinigungsdüsen zur Einbringung eines Reinigungsmediums in zwei oder mehr Zwischenräume zwischen unterschiedlichen zueinander benachbarten Schneckengängen eingebracht werden.

Bei einer weiteren Weiterbildung ist in dem schlittenförmigen Grundkörper mindestens ein Zuführungskanal zur Zuführung des Reinigungsmediums zu mindestens einer Reinigungsdüse gebildet. Der bzw. die Zuführungskanäle in dem Grundkörper können in röhrenförmigen Distanzstücken münden, an denen die Reinigungsdüsen angebracht sind. Über die Zuführungskanäle und die Distanzstücke kann das Reinigungsmedium den Reinigungsdüsen zugeführt werden. Der Zuführungskanal kann an einem Ende einen Anschluss für eine Zuführungseinrichtung zur Zuführung des Reinigungsmediums zu dem schlittenförmigen Grundkörper aufweisen.

Bei einer weiteren Ausführungsform umfasst die Reinigungsvorrichtung einen Durchflussmesser zum Messen der Flussrate des in den Zwischenraum eingebrachten Reinigungsmediums. Der Durchflussmesser kann insbesondere als Durchflusswächter verwendet werden, um zu erkennen, ob die gewünschte Flussrate des Reinigungsmediums erreicht wird. Ist dies nicht der Fall, deutet dies auf ein Verstopfen der Reinigungsdüsen oder anderer Bauteile hin, durch die das Reinigungsmedium fließt. Die Reinigungsvorrichtung kann in diesem Fall überprüft und erforderlichenfalls gereinigt werden.

Bei einer weiteren Weiterbildung umfasst die Reinigungsvorrichtung eine Zuführungseinrichtung, insbesondere einen Schlauch, zur Zuführung des Reinigungsmediums zu dem schlittenförmigen Grundkörper. Das Reinigungsmedium kann dem schlittenförmigen Grundkörper beispielsweise über einen Schlauch zugeführt werden, wie dies bei einem Hochdruckreiniger der Fall ist. Der Schlauch kann beispielsweise über eine federangetriebene oder pneumatische Schlauchhaspel zur Verfügung gestellt werden, die ein kontrolliertes Abrollen des Schlauchs und somit ein Anpassen der Länge des Schlauchs in Abhängigkeit von der axialen Position des schlittenförmigen Grundkörpers in dem Schneckentrog ermöglicht. Für die Halterung des Schlauchs kann an der Innenseite des Schneckentrogs eine Halterungseinrichtung angebracht sein.

Ein weiterer Aspekt der Erfindung betrifft einen Schneckenförderer, umfassend: eine Förderschnecke, einen Schneckentrog, in dem die Förderschnecke gelagert ist, einen Antrieb zur Drehung der Förderschnecke, sowie eine Reinigungsvorrichtung, die wie weiter oben beschrieben ausgebildet ist. Wie weiter oben beschrieben wurde, wird für die Reinigung der Förderschnecke und des Schneckentrogs der schlittenförmige Grundkörper auf mindestens zwei Schneckengänge der Förderschnecke aufgelegt und mit Hilfe des Antriebs in axialer Richtung entlang der Förderschnecke verschoben. Um das (flüssige) Reinigungsmedium aus dem Schneckentrog der Förderschnecke abzuführen, kann der Schneckentrog unter einem Winkel von typischerweise ca. 1° oder mehr zur Horizontalen geneigt ausgerichtet sein. Zu diesem Zweck kann der Schneckentrog beispielsweise auf einem Standgestell oder dergleichen gelagert sein.

Bei einer Ausführungsform weist der Schneckentrog an seiner Innenseite eine Halterungseinrichtung zur Halterung des Schlauchs für die Zuführung des Reinigungsmediums zu dem schlittenförmigen Grundkörper auf. Die Halterungseinrichtung kann eine Mehrzahl von Halterungselementen z.B. in Form von an der Innenseite des Schneckentrogs angebrachten offenen Ösen aufweisen, die an dem Schneckentrog festgeschweißt oder auf andere Weise an dem Schneckentrog befestigt sind. Bevorzugt ist die Halterungseinrichtung bzw. sind die Halterungselemente an der Innenseite des Schneckentrogs oberhalb von einer in dem Schneckentrog befindlichen Staukante angeordnet, um die Gefahr zu reduzieren, dass das Produkt, das von der Förderschnecke gefördert wird, sich an der Halterungseinrichtung bzw. an den Halterungselementen festsetzt.

Bei einer weiteren Ausführungsform ist an mindestens einem Ende des Schneckentrogs ein insbesondere magnetischer Positionssensor angebracht, um das Erreichen einer axialen Endlage des schlittenförmigen Grundkörpers in dem Schneckentrog zu detektieren. Wie weiter oben beschrieben wurde, kann zu diesem Zweck die magnetische Codierung (oder eine andere Art von Codierung) des in den schlittenförmigen Grundkörper integrierten Körpers detektiert werden. An Stelle eines magnetischen Positionssensors kann auch eine andere Art von Positionssensor verwendet werden, beispielsweise ein optischer Positionssensor.

Die Erfindung betrifft auch ein Verfahren zum Reinigen einer Förderschnecke eines Schneckenförderers, wie er weiter oben beschrieben ist, umfassend die Schritte: Auflegen des schlittenförmigen Grundkörpers auf mindestens zwei Schneckengänge der Förderschnecke, Reinigen der Förderschnecke durch Einbringen eines Reinigungsmediums in einen Zwischenraum zwischen mindestens zwei der Schneckengänge, sowie (gleichzeitiges) Verschieben des schlittenförmigen Grundkörpers in axialer Richtung der Förderschnecke durch Drehen der Förderschnecke mittels des Antriebs. Typischerweise wird der schlittenförmige Grundkörper an einem Ende des Schneckentrogs auf die Schneckengänge der Förderschnecke aufgesetzt und entlang der gesamten Länge der Förderschnecke bis zum anderen Ende des Schneckentrogs verschoben, um die gesamte Förderschnecke zu reinigen. Das Auflegen des schlittenförmigen Grundkörpers kann manuell erfolgen, es ist aber auch möglich, dass das Auflegen automatisiert, z.B. mittels eines Roboters, eines schwenkbaren Arms oder dergleichen erfolgt. Das Auflegen des schlittenförmigen Grundkörpers kann bei einem nach oben offenen Schneckentrog direkt von der Oberseite des Schneckentrogs erfolgen. Bei einem geschlossenen Schneckentrog kann der schlittenförmige Grundkörper seitlich in den Schneckentrog eingeführt und dann abgesenkt werden.

Eine Variante des Verfahrens umfasst folgende Schritte: Detektieren des Erreichens einer axialen Endlage des schlittenförmigen Grundkörpers in dem Schneckentrog, sowie Umkehren der Drehrichtung des Antriebs zum axialen Verschieben des schlittenförmigen Grundkörpers in entgegengesetzter Richtung in dem Schneckentrog, wobei bevorzugt beim Detektieren des Erreichens der axialen Endlage das Reinigungsmedium der Reinigungseinrichtung gewechselt wird. Wird eine axiale Endlage über den weiter oben beschriebenen Positionssensor detektiert, kann die Drehrichtung des Antriebs umgekehrt werden, um den schlittenförmigen Grundkörper in entgegengesetzter Richtung zu verschieben. Die Umkehrung der Drehrichtung des Antriebs ist insbesondere bei einem frequenzgeregelten Antrieb einfach zu realisieren. Der schlittenförmige Grundkörper wird in diesem Fall typischerweise an das andere Ende des Schneckentrogs verschoben, um dort aus dem Schneckentrog entnommen zu werden. Alternativ kann der schlittenförmige Grundkörper für die Reinigung mehrmals zwischen den beiden Endlagen verschoben werden. Wenn der schlittenförmige Grundkörper sich in einer Endlage befindet und die Drehrichtung geändert wird, kann auch das Reinigungsmedium gewechselt werden. Beispielsweise kann die Reinigungseinrichtung bei der Bewegung in Vorwärtsrichtung mit klarem Wasser oder mit Druckluft vorspülen, im Rücklauf mit einem Reinigungsmittel einschäumen, erneut im Vorlauf mit Wasser spülen, im Rücklauf desinfizieren, im Vorlauf und ggf. im Rücklauf nachspülen, etc. Bei der Bewegung des Grundkörpers zu dem axialen Ende des Schneckentrogs zurück, an dem dieser auf die Förderschnecke aufgelegt wurde, wird auch die Länge des Schlauchs verkürzt, der zur Zuführung des Reinigungsmediums dient, so dass dieser gemeinsam mit dem Grundkörper aus dem Schneckentrog entnommen werden kann, ohne dass zu diesem Zweck die Verbindung des Schlauchs mit dem Grundkörper oder mit der Schlauchhaspel gelöst werden muss.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Schneckenförderers mit einer Reinigungsvorrichtung, die einen schlittenförmigen Grundkörper aufweist, in einem Längsschnitt, sowie
- Fig. 2: eine schematische Darstellung des Schneckenförderers von Fig. 1 in einem Querschnitt.

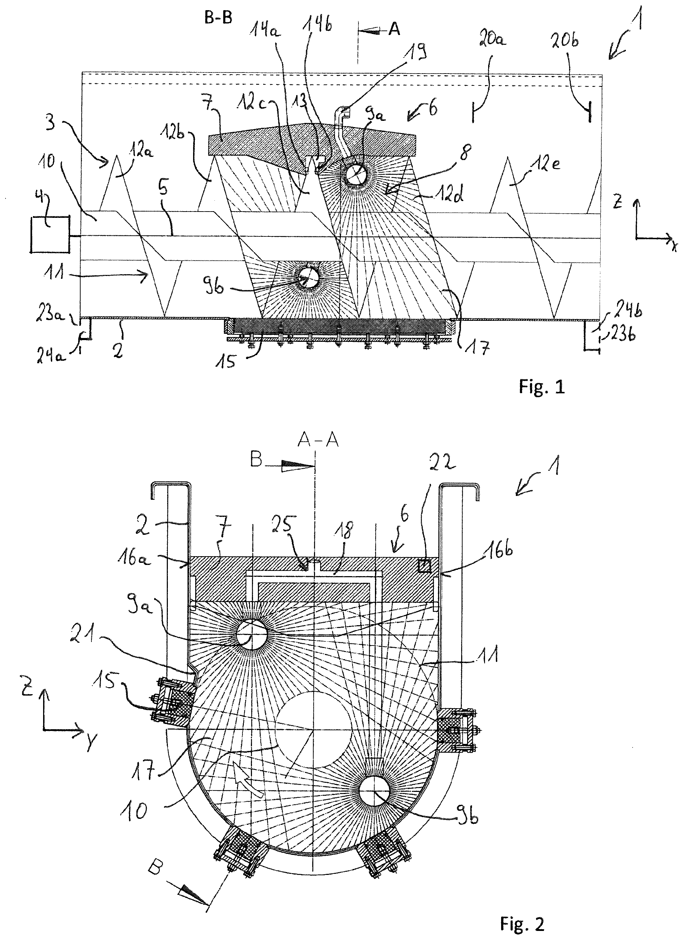

**Fig. 1** und **Fig. 2** zeigen einen Schneckenförderer 1, der einen Schneckentrog 2 aufweist, in dem eine Förderschnecke 3 gelagert ist. Der Schneckenförderer 1 weist einen Antrieb 4 auf, um die Förderschnecke 3 um ihre Längsachse 5 zu drehen, wie in Fig. 2 durch einen Pfeil angedeutet ist. Der Schneckenförderer 1 weist auch eine Reinigungsvorrichtung 6 auf, die einen schlittenförmigen Grundkörper 7 sowie eine Reinigungseinrichtung 8 mit zwei Reinigungsdüsen 9a, 9b umfasst, die an dem schlittenförmigen Grundkörper 7 angebracht ist.

Die Förderschnecke 3 weist eine Schneckenwelle 10 mit einer helixförmigen Schneckenwendel 11 mit einer Mehrzahl von Schneckengängen 12a-e auf. In Fig. 1 sind zur Vereinfachung nur fünf Schneckengänge 12a-e bildlich dargestellt. Wie in Fig. 1 zu erkennen ist, liegt der schlittenförmige Grundkörper 7 auf drei in axialer Richtung, d.h. entlang der Längsachse 5 der Förderschnecke 3, aufeinander folgenden Schneckengängen 12b-d der Schneckenwendel 11 auf. Der schlittenförmige Grundkörper 7 kann entlang der Längsachse 5 der Förderschnecke 3 verschoben werden, indem der Antrieb 4 des Schneckenförderers 1 aktiviert wird, um die Förderschnecke 3 um die Längsachse 5 zu drehen.

Für die Stabilisierung des schlittenförmigen Grundkörpers 7 bei der Bewegung entlang der Längsachse 5 der Förderschnecke 3 weist dieser neben einem vergleichsweise hohen Gewicht in der Größenordnung von ca. 10 kg, 20 kg oder mehr eine Einbuchtung 13 auf, in welche der mittlere Schneckengang 12c der Förderschnecke 3 eingreift. Wie in Fig. 1 zu erkennen ist, weist die Einbuchtung 13 ein im Längsschnitt L-förmiges Profil bzw. eine L-förmige Geometrie auf. Die Einbuchtung 13 ist angepasst an ein nicht bildlich dargestelltes L-förmiges Profil des radial außen liegenden Endes des mittleren Schneckengangs 12c, welches im Bereich einer Zwischenlagerung der Förderschnecke 3 in dem Schneckentrogs 2 verwendet wird, um die Reibung mit im Bereich der Zwischenlagerung an dem Schneckentrog 2 angebrachten stabförmigen Lagerungselementen 15 zu reduzieren.

Die Einbuchtung 13 weist zwei in vertikaler Richtung verlaufende Anlageflächen 14a, 14b auf, die an den einander gegenüberliegenden Seiten des mittleren Schneckengangs 12c anliegen und die Kraftübertragung auf den schlittenförmigen Grundkörper 7 bei der Bewegung entlang der Längsachse 5 der Förderschnecke 3 verbessern. Für die Stabilisierung des schlittenförmigen Grundkörpers 7 bei der Verschiebung weist dieser in Fig. 2 dargestellte seitliche Führungsflächen 16a, 16b auf, die parallel ausgerichtet sind und die an den sich in vertikaler Richtung erstreckenden Innenwänden des Schneckentrogs 2 anliegen.

Um den Schneckentrog 2 sowie die Förderschnecke 3 zu reinigen, wird über die beiden Reinigungsdüsen 9a, 9b ein Reinigungsmedium 17 sowohl in einen Zwischenraum zwischen dem ersten und zweiten Schneckengang 12b, 12c als auch zwischen dem zweiten und dritten Schneckengang 12c, 12d eingebracht, auf denen der schlittenförmige Grundkörper 7 aufliegt. Bei den Reinigungsdüsen 9a, 9b handelt es sich um Rotations-Reinigungsdüsen 9a, 9b, die das Reinigungsmedium 17 in alle Richtungen verteilen, wie sowohl in Fig. 1 als auch in Fig. 2 anhand der vom Zentrum der jeweiligen Reinigungsdüse 9a, 9b ausgehenden Linien dargestellt ist.

Um sicherzustellen, dass die Schneckengänge 12a-e vollständig gereinigt werden können, ist es erforderlich, dass das Reinigungsmedium 17 an alle Orte in den Zwischenräumen gelangen kann. Um dies zu ermöglichen, sind die erste Reinigungsdüse 9a und die zweite Reinigungsdüse 9b in vertikaler Richtung Z unterschiedlich weit von dem schlittenförmigen Grundkörper 7 beabstandet. Der jeweilige Abstand in vertikaler Richtung Z ist so gewählt, dass die erste Reinigungsdüse 9a oberhalb der Schneckenwelle 10 positioniert ist, während die zweite Reinigungsdüse 9b unterhalb der Schneckenwelle 10 positioniert ist. Zusätzlich sind die beiden Reinigungsdüsen 9a, 9b auch in Längsrichtung der Förderschnecke 3, d.h. in X-Richtung, sowie in Y-Richtung zueinander versetzt. Durch die versetzte Anordnung der Reinigungsdüsen 9a, 9b kann ein "Schatten" bei der Reinigung vermieden werden, der bei der Verwendung nur einer einzigen Reinigungsdüse durch die Schneckenwelle 10 verursacht würde.

Für die Zuführung des Reinigungsmediums 17 zu den Reinigungsdüsen 9a, 9b weist der schlittenförmige Grundkörper 7 einen Zuführungskanal 18 auf, der sich ausgehend von einem Anschluss für eine Zuführungseinrichtung in Form eines Schlauchs 19 verzweigt, um das Reinigungsmedium 17 den beiden Reinigungsdüsen 9a, 9b zuzuführen. Von dem Schlauch 19 ist in Fig. 1 nur ein Ende dargestellt, an dem dieser mit dem Zuführungskanal 18 verbunden ist. Der Schlauch 19 ist an einer Halterungseinrichtung geführt, die im gezeigten Beispiel durch Halterungselemente in Form von Ösen 20a, 20b, ... gebildet ist, die an der Innenseite des Schneckentrogs 2 angebracht sind und die eine horizontale Führung für den Schlauch 19 bilden. Die Ösen 20a, 20b, ... sind nach oben offen und dienen der Auflage des Schlauchs 19 bei der Verschiebung in Längsrichtung 5 der Förderschnecke 3. Der Schlauch 19 wird durch eine nicht bildlich dargestellte federgetriebene oder pneumatische Schlauchhaspel bereitgestellt.

Die Ösen 20a, 20b, ... sind an einer Seite des Schneckentrogs 2 gebildet, an der eine in Fig. 2 dargestellte Staukante 21 vorgesehen ist, welche verhindern soll, dass das mittels der Förderschnecke 3 geförderte Produkt über die Staukante 21 hinaus nach oben mitgenommen wird. Die Ösen 20a, 20b sind an der Innenseite des Schneckentrogs 2 oberhalb der Staukante 21 angebracht, um zu verhindern, dass diese durch das von der Förderschnecke 3 geförderte Produkt verschmutzt werden. Für die Abführung des Reinigungsmediums 17 ist es günstig, wenn der Schneckentrog 2 ein geringfügiges Gefälle aufweist, d.h. wenn der Schneckentrog 2 unter einem Winkel von typischerweise mehr als ca. 1° gegenüber der Horizontalen geneigt ist, was beispielsweise durch ein Standgestell erreicht werden kann.

In dem schlittenförmigen Grundkörper 7 ist ein in Fig. 2 schematisch dargestellter Körper 22 mit einer magnetischen Codierung gebildet, der eine berührungslose Messung der Position des schlittenförmigen Grundkörpers 7 in Längsrichtung 5 der Förderschnecke 3 (d.h. in X-Richtung) ermöglicht. Der Körper 22 ist aus einem permanentmagnetischen Material gebildet und ermöglicht es insbesondere zu erkennen, wenn der schlittenförmige Grundkörper 7 eines der beiden Enden des Schneckentrogs 2 erreicht hat, d.h. wenn der schlittenförmige Grundkörper 7 einer der beiden axialen Endlagen 23a, 23b erreicht. Für diese Erkennung sind im gezeigten Beispiel an beiden axialen Enden des Schneckentrogs 2 ortsfest angeordnete magnetische Positionssensoren 24a, 24b angebracht, die das Erreichen der jeweiligen axialen Endlage 23a, 23b durch den schlittenförmigen Grundkörper 7 anhand der magnetischen Codierung des Körpers 22 detektieren. Mit Hilfe von derartigen Positionssensoren und einer geeigneten Steuerungseinrichtung kann der Reinigungsweg des schlittenförmigen Grundkörpers 7 begrenzt werden.

Wird der schlittenförmige Grundkörper 7 an einem ersten, beispielsweise unteren Ende des Schneckentrogs 2 auf die dort angeordneten Schneckengänge aufgelegt und wird mit Hilfe des Körpers 22 detektiert, dass der schlittenförmige Grundkörper 7 das zweite, beispielsweise obere Ende des Schneckentrogs 2 erreicht hat, kann der schlittenförmige Grundkörper 7 an dem zweiten Ende von der Förderschnecke 3 abgehoben werden und der Reinigungsvorgang ist beendet. Bei einem nach oben offenen Schneckentrog 2 kann der Schlauch 19 bei der Entnahme des schlittenförmigen Grundkörpers 7 ebenfalls aus dem Schneckentrog 2 entnommen und dessen Länge mittels der Schlauchhaspel verringert werden. Nachfolgend kann der schlittenförmige Grundkörper 7 erneut am unteren Ende des Schneckentrogs 2 auf den dort befindlichen Schneckengängen aufgelegt werden, um einen weiteren Reinigungsschritt durchzuführen.

Für den Fall, dass der Antrieb 4 des Schneckenförderers 1 eine Umkehr der Drehrichtung erlaubt, kann beim bzw. nach dem Detektieren der zweiten, oberen Endlage 23b eine Umkehr der Drehrichtung der Förderschnecke 3 erfolgen, so dass der schlittenförmige Grundkörper 7 in entgegengesetzter Richtung in dem Schneckentrog 2 verschoben werden kann, bis dieser erneut die erste, untere Endlage 23a erreicht. Bei der Änderung der Drehrichtung der Förderschnecke 3 kann das Reinigungsmedium geändert werden. So kann beispielsweise in einem ersten Reinigungsschritt bei der Vorwärtsbewegung des schlittenförmigen Grundkörpers 7 ein Reinigungsmedium in Form eines Spülmediums, z.B. in Form von klarem Wasser oder in Form von Druckluft, verwendet werden, während bei der Rückwärtsbewegung ein Reinigungsmedium in Form eines Reinigungsschaums verwendet wird, etc. Sowohl das Auflegen als auch die Entnahme des schlittenförmigen Grundkörpers 7 von der Förderschnecke 3 können manuell oder automatisiert beispielsweise unter Verwendung eines pneumatischen Hebearms, eines Roboterarms oder dergleichen erfolgen.

Für die Messung der Flussrate des Reinigungsmediums 17, das in die jeweiligen Zwischenräume zwischen den Schneckengängen 12a-e eingebracht wird, weist der schlittenförmige Grundkörper 7 an dem Zuführungskanal 18 einen Durchflussmesser 25 auf. Es hat sich als vorteilhaft erwiesen, wenn der Durchfluss bzw. die Flussrate des Reinigungsmediums 17 überwacht wird, um festzustellen, ob die Reinigungsdüsen 9a, 9b, der in dem schlittenförmigen Grundkörper 7 gebildete Zuführungskanal 18 oder ggf. der Schlauch 19 durch Verunreinigungen durch das Produkt, welches von dem Schneckenförderer 1 transportiert wird (beispielsweise Wurstbrät oder dergleichen) teilweise verstopft sind, so dass die Flussrate reduziert wird. Gegebenenfalls kann bei der Detektion einer reduzierten Flussrate die Reinigungsdauer verlängert werden bzw. es können zusätzliche Reinigungsschritte durchgeführt werden, um die Förderschnecke 3 des Schneckenförderers 1 zu reinigen.

## Patentansprüche

1. Reinigungsvorrichtung (6) zur Reinigung einer Förderschnecke (2) eines Schneckenförderers (1), umfassend:
einen schlittenförmigen Grundkörper (7) zur Auflage auf mindestens zwei Schneckengängen (12b-c) der Förderschnecke (3), um den schlittenförmigen Grundkörper (7) in axialer Richtung (X) durch eine Drehbewegung der Förderschnecke (3) zu verschieben, sowie eine an dem schlittenförmigen Grundkörper (7) angebrachte Reinigungseinrichtung (8) zur Reinigung der Förderschnecke (3).

2. Reinigungsvorrichtung nach Anspruch 1, bei welcher der schlittenförmige Grundkörper (7) mindestens eine Anlagefläche (14a, 14b) zur Anlage an einer Seite eines Schneckengangs (12c) der Förderschnecke (3) aufweist.

3. Reinigungsvorrichtung nach Anspruch 2, bei welcher der schlittenförmige Grundkörper (7) mindestens eine Einbuchtung (13) aufweist, in die mindestens ein Schneckengang (12c) der Förderschnecke (3) eingreift.

4. Reinigungsvorrichtung nach Anspruch 3, bei welcher die Einbuchtung (13) für den Eingriff eines L-förmigen Endes eines Schneckengangs (12c) eine L-förmige Geometrie aufweist.

5. Reinigungsvorrichtung nach einem der vorhergehenden Ansprüche, bei welcher der schlittenförmige Grundkörper (7) seitliche Führungsflächen (16a, 16b) zur Führung in einem Schneckentrog (2) der Förderschnecke (3) aufweist.

6. Reinigungsvorrichtung nach einem der vorhergehenden Ansprüche, weiter umfassend: einen Körper (22) mit einer insbesondere magnetischen Codierung zur Bestimmung mindestens einer axialen Endlage (23a, 23b) des schlittenförmigen Grundkörpers (7) in einem Schneckentrog (2) des Schneckenförderers (1).

7. Reinigungsvorrichtung nach einem der vorhergehenden Ansprüche, bei welcher die Reinigungseinrichtung (8) ausgebildet ist, ein Reinigungsmedium (17) in mindestens einen Zwischenraum zwischen zwei benachbarte Schneckengänge (12b, 12c; 12c, 12d) einzubringen.

8. Reinigungsvorrichtung nach Anspruch 7, bei welcher die Reinigungseinrichtung (8) zur Einbringung des Reinigungsmediums (17) in den Zwischenraum mindestens eine insbesondere rotierende Reinigungsdüse (9a, 9b) aufweist.

9. Reinigungsvorrichtung nach Anspruch 8, bei welcher die Reinigungseinrichtung (8) mindestens zwei Reinigungsdüsen (9a, 9b) aufweist, die zur Zuführung des Reinigungsmediums (17) auf unterschiedliche Seiten der Schneckenwelle (10) in unterschiedlichen Abständen von dem schlittenförmigen Grundkörper (7) angeordnet sind.

10. Reinigungsvorrichtung nach Anspruch 8 oder 9, bei der in dem schlittenförmigen Grundkörper (7) mindestens ein Zuführungskanal (18) zur Zuführung des Reinigungsmediums (17) zu mindestens einer Reinigungsdüse (9a, 9b) gebildet ist.

11. Reinigungsvorrichtung nach einem der Ansprüche 7 bis 10, weiter umfassend: einen Durchflussmesser (25) zum Messen der Flussrate des in den Zwischenraum eingebrachten Reinigungsmediums (17).

12. Reinigungsvorrichtung nach einem der vorhergehenden Ansprüche, bei welcher der schlittenförmige Grundkörper (7) zur Auflage auf die mindestens zwei Schneckengänge (12a-c) der Förderschnecke (3) an seiner Unterseite mindestens eine plane Auflagefläche aufweist.

13. Schneckenförderer (1), umfassend:
eine Förderschnecke (3),
einen Schneckentrog (2), in dem die Förderschnecke (3) gelagert ist,
einen Antrieb (4) zur Drehung der Förderschnecke (3), sowie eine Reinigungsvorrichtung (6) nach einem der vorhergehenden Ansprüche.

14. Schneckenförderer nach Anspruch 13, bei dem der Schneckentrog (2) an seiner Innenseite eine Halterungseinrichtung (20a, 20b, ...) zur Halterung des Schlauchs (19) für die Zuführung des Reinigungsmediums (17) zu dem schlittenförmigen Grundkörper (7) aufweist.

15. Schneckenförderer nach Anspruch 13 oder 14, bei dem an mindestens einem Ende des Schneckentrogs (2) ein insbesondere magnetischer Positionssensor (24a, 24b) angebracht ist, um das Erreichen einer axialen Endlage (23a, 23b) des schlittenförmigen Grundkörpers (7) in dem Schneckentrog (2) zu detektieren.

16. Verfahren zum Reinigen einer Förderschnecke (3) eines Schneckenförderers (1) nach Anspruch 13 oder 14, umfassend:
Auflegen des schlittenförmigen Grundkörpers (7) auf mindestens zwei Schneckengänge (12b-d) der Förderschnecke (3),
Reinigen der Förderschnecke (3) durch Einbringen eines Reinigungsmediums (17) in einen Zwischenraum zwischen mindestens zwei der Schneckengänge (12b, 12c; 12c, 12d), sowie
Verschieben des schlittenförmigen Grundkörpers (7) in axialer Richtung (X) der Förderschnecke (3) durch Drehen der Förderschnecke (3) mittels des Antriebs (4).

17. Verfahren nach Anspruch 16, weiter umfassend:
Detektieren des Erreichens einer axialen Endlage (23a, 23b) des schlittenförmigen Grundkörpers (7) in dem Schneckentrog (2), sowie Umkehren der Drehrichtung des Antriebs (4) zum axialen Verschieben des schlittenförmigen Grundkörpers (7) in entgegengesetzter Richtung in dem Schneckentrog (3), wobei bevorzugt beim Detektieren des Erreichens der axialen Endlage (23a, 23b) das Reinigungsmedium (17) gewechselt wird.

## Claims

1. Cleaning apparatus (6) for cleaning a conveyor screw (2) of a screw conveyor (1), comprising:
a slide-like basic body (7) for resting on at least two screw flights (12b-c) of the conveyor screw (3) to displace the slide-like basic body (7) in an axial direction (X) by means of a rotational movement of the conveyor screw (3), and a cleaning device (8) which is attached to the slide-like basic body (7), for cleaning the conveyor screw (3).

2. Cleaning apparatus according to Claim 1, in which the slide-like basic body (7) has at least one abutment surface (14a, 14b) for butting against one side of a screw flight (12c) of the conveyor screw (3).

3. Cleaning apparatus according to Claim 2, in which the slide-like basic body (7) has at least one indentation (13) in which at least one screw flight (12c) of the conveyor screw (3) engages.

4. Cleaning apparatus according to Claim 3, in which the indentation (13) has an L-shaped geometry for the engagement of an L-shaped end of a screw flight (12c).

5. Cleaning apparatus according to one of the preceding claims, in which the slide-like basic body (7) has lateral guide surfaces (16a, 16b) for guiding in a screw trough (2) of the conveyor screw (3).

6. Cleaning apparatus according to one of the preceding claims, further comprising:
a body (22) having an in particular magnetic coding for determining at least one axial end position (23a, 23b) of the slide-like basic body (7) in a screw trough (2) of the screw conveyor (1).

7. Cleaning apparatus according to one of the preceding claims, in which the cleaning device (8) is designed to introduce a cleaning medium (17) into at least one intermediate space between two adjacent screw flights (12b, 12c; 12c, 12d).

8. Cleaning apparatus according to Claim 7, in which the cleaning device (8) has at least one in particular rotating cleaning nozzle (9a, 9b) for introducing the cleaning medium (17) into the intermediate space.

9. Cleaning apparatus according to Claim 8, in which the cleaning device (8) has at least two cleaning nozzles (9a, 9b) which, for the supply of the cleaning medium (17), are arranged on different sides of the screw shaft (10) at different distances from the slide-like basic body (7).

10. Cleaning apparatus according to Claim 8 or 9, in which at least one supply duct (18) for supplying the cleaning medium (17) to at least one cleaning nozzle (9a, 9b) is formed in the slide-like basic body (7).

11. Cleaning apparatus according to one of Claims 7 to 10, further comprising: a flow meter (25) for measuring the flow rate of the cleaning medium (17) introduced into the intermediate space.

12. Cleaning apparatus according to one of the preceding Claims, wherein the slide-like basic body (7) comprises at least one flat supporting surface on its lower side for resting on the at least two screw flights (12b-c) of the conveyor screw (3).

13. Screw conveyor (1), comprising:
a conveyor screw (3),
a screw trough (2) in which the conveyor screw (3) is mounted,
a drive (4) for rotating the conveyor screw (3), and
a cleaning apparatus (6) according to one of the preceding claims.

14. Screw conveyor according to Claim 13, in which the inside of the screw trough (2) has a holding device (20a, 20b, ...) for holding the hose (19) for supplying the cleaning medium (17) to the slide-like basic body (7).

15. Screw conveyor according to Claim 13 or 14, in which an in particular magnetic position sensor (24a, 24b) is attached to at least one end of the screw trough (2) in order to detect the reaching of an axial end position (23a, 23b) of the slide-like basic body (7) in the screw trough (2).

16. Method for cleaning a conveyor screw (3) of a screw conveyor (1) according to Claim 13 or 14, comprising:
placing the slide-like basic body (7) onto at least two screw flights (12b-d) of the conveyor screw (3),
cleaning the conveyor screw (3) by introducing a cleaning medium (17) into an intermediate space between at least two of the screw flights (12b, 12c; 12c, 12d), and
displacing the slide-like basic body (7) in the axial direction (X) of the conveyor screw (3) by rotating the conveyor screw (3) by means of the drive (4).

17. Method according to Claim 16, further comprising:
detecting the reaching of an axial end position (23a, 23b) of the slide-like basic body (7) in the screw trough (2), and
reversing the direction of rotation of the drive (4) for axially displacing the slide-like basic body (7) in the opposite direction in the screw trough (3), wherein
preferably, when the reaching of the axial end position (23a, 23b) is detected, the cleaning medium (17) is changed.

## Revendications

1. Dispositif de nettoyage (6) permettant de nettoyer une vis sans fin (2) d'un transporteur à vis (1), comprenant :
un corps de base en forme de chariot (7) à poser sur au moins deux spires (12b-c) de la vis sans fin (3) afin de décaler le corps de base en forme de chariot (7) dans une direction axiale (X) par une rotation de la vis sans fin (3), ainsi qu'un équipement de nettoyage (8) monté sur le corps de base en forme de chariot (7) et servant à nettoyer la vis sans fin (3).

2. Dispositif de nettoyage selon la revendication 1, dans lequel le corps de base en forme de chariot (7) présente au moins une surface d'appui (14a, 14b) pour s'appuyer contre une face d'une spire (12c) de la vis sans fin (3).

3. Dispositif de nettoyage selon la revendication 2, dans lequel le corps de base en forme de chariot (7) présente au moins une échancrure (13) dans laquelle vient en prise au moins une spire (12c) de la vis sans fin (3).

4. Dispositif de nettoyage selon la revendication 3, dans lequel l'échancrure (13) présente une géométrie en forme de L pour la mise en prise d'une extrémité en forme de L d'une spire (12c).

5. Dispositif de nettoyage selon l'une quelconque des revendications précédentes, dans lequel le corps de base en forme de chariot (7) présente des surfaces de guidage latérales (16a, 16b) servant à guider la vis sans fin (3) dans une auge (2).

6. Dispositif de nettoyage selon l'une quelconque des revendications précédentes, comprenant en outre : un corps (22) pourvu d'un codage, en particulier magnétique, servant à déterminer au moins une position d'extrémité axiale (23a, 23b) du corps de base en forme de chariot (7) dans une auge (2) du transporteur à vis (1).

7. Dispositif de nettoyage selon l'une quelconque des revendications précédentes, dans lequel l'équipement de nettoyage (8) est réalisé pour introduire un produit de nettoyage (17) dans au moins un intervalle entre deux spires voisines (12b, 12c ; 12c, 12d).

8. Dispositif de nettoyage selon la revendication 7, dans lequel l'équipement de nettoyage (8) présente au moins une buse de nettoyage (9a, 9b), en particulier rotative, pour l'introduction du produit de nettoyage (17) dans l'intervalle.

9. Dispositif de nettoyage selon la revendication 8, dans lequel l'équipement de nettoyage (8) présente au moins deux buses de nettoyage (9a, 9b) qui, pour amener le produit de nettoyage (17), sont disposées sur différents côtés de l'arbre de vis sans fin (10) à différentes distances du corps de base en forme de chariot (7).

10. Dispositif de nettoyage selon la revendication 8 ou 9, dans lequel au moins un canal d'amenée (18) servant à amener le produit de nettoyage (17) à au moins une buse de nettoyage (9a, 9b) est formé dans le corps de base en forme de chariot (7).

11. Dispositif de nettoyage selon l'une quelconque des revendications 7 à 10, comprenant en outre : un débitmètre (25) servant à mesurer le débit du produit de nettoyage (17) introduit dans l'intervalle.

12. Dispositif de nettoyage selon l'une quelconque des revendications précédentes, dans lequel, pour s'appuyer sur les au moins deux spires (12a-c) de la vis sans fin (3), le corps de base en forme de chariot (7) présente sur sa face inférieure au moins une surface d'appui plane.

13. Convoyeur à vis (1), comprenant :
une vis sans fin (3),
une auge (2) dans laquelle est montée la vis sans fin (3),
un mécanisme d'entraînement (4) pour la rotation de la vis sans fin (3), et
un dispositif de nettoyage (6) selon l'une quelconque des revendications précédentes.

14. Convoyeur à vis selon la revendication 13, dans lequel l'auge (2) présente sur sa face intérieure un équipement de retenue (20a, 20b, ...) servant à retenir le tube (19) servant à amener le produit de nettoyage (17) au corps de base en forme de chariot (7).

15. Convoyeur à vis selon la revendication 13 ou 14, dans lequel à au moins une extrémité de l'auge (2), un capteur de position (24a, 24b), en particulier magnétique, est monté afin de détecter qu'une position d'extrémité axiale (23a, 23b) du corps de base en forme de chariot (7) dans l'auge (2) est atteinte.

16. Procédé de nettoyage d'une vis sans fin (3) d'un transporteur à vis (1) selon la revendication 13 ou 14, comprenant les étapes consistant à :
poser le corps de base en forme de chariot (7) sur au moins deux spires (12b-d) de la vis sans fin (3),
nettoyer la vis sans fin (3) par l'introduction d'un produit de nettoyage (17) dans un intervalle entre au moins deux des spires (12b, 12c ; 12c, 12d), ainsi que
décaler le corps de base en forme de chariot (7) dans la direction axiale (X) de la vis sans fin (3) par la rotation de la vis sans fin (3) au moyen du mécanisme d'entraînement (4).

17. Procédé selon la revendication 16, comprenant en outre les étapes consistant à :
détecter qu'une position d'extrémité axiale (23a, 23b) du corps de base en forme de chariot (7) dans l'auge (2) est atteinte, et
inverser le sens de rotation du mécanisme d'entraînement (4) pour le décalage axial du corps de base en forme de chariot (7) dans le sens opposé dans l'auge (3), dans lequel de préférence le produit de nettoyage (17) est changé lorsqu'il est détecté que la position d'extrémité axiale (23a, 23b) est atteinte.
